# EUROPEAN PATENT APPLICATION

(11) **EP 4 557 554 A1**
(43) Date of publication of application: **21.05.2025**
(21) Application number: 23383163.5
(22) Date of filing: 15.11.2023
(51) Int. Cl.: H02J 3/00, H02J 3/32, H02J 3/38, H02J 3/46

(54) **METHOD OF POWER MANAGEMENT OF A HYBRID POWER PLANT**

(71) Applicant: Siemens Gamesa Renewable Energy Innovation & Technology S.L., 31621 Sarriguren (Navarra) (ES)
(72) Inventor: Barrenechea Gruber, Roberto Carlos, 28043 Madrid (ES); Rojo Ochoa, Raquel, 31600 Burlada Navarra (ES)
(74) Representative: SGRE-Association

(57) **Abstract**

Method of power management of a hybrid power plant (100) comprising at least one type of renewable power generation equipment (110) and an energy storage system (120), wherein the power plant (100) comprises at least one point of connection (101) with an electrical grid (140), wherein the method comprises at an initial time (tO):
determining a power availability schedule (207) of the hybrid power plant (100) during a subsequent time range (tS);
providing the power availability schedule (207) to a controller (141) of the grid (140);
receiving from the controller (141) of a grid (140) a committed power schedule (210) for the subsequent time range (tS) based on the power availability schedule (207) for the subsequent time range (tS);
wherein the power availability schedule (207) for the subsequent time range (tS) is determined on the basis of at least one historical parameter (219) related to a power delivery during a precedent time range (tP).

## Description

### Field of invention

The present invention relates to a method of power management for a hybrid power plant comprising at least one type of renewable energy generation equipment and an energy storage system.

### Art Background

Hybrid power plants comprising renewable power generation equipment, such as wind turbines, lack predictability and dispatchability of power supply due to the ever-changing weather conditions. This lack causes difficulties in integrating hybrid power plants with renewable power generation equipment in traditional electrical grids and markets, as the controllers of the grids, as well as users, demand a certain stability in the power supply. Such problem is particularly pronounced in energy markets, in which an energy management system (or EMS) negotiates with a controller of a grid during a precedent time range a power quantity to be delivered in a subsequent time range. Such process can happen in monosession energy markets, in which the negotiation is performed only once, or in multisession energy markets, in which the negotiation is performed more times at (predefined) time intervals between the precedent time range and the subsequent time range.

The lack of predictability and dispatchability hinders an optimal functioning of both the hybrid power plant as well as the grid.

In the prior art, predictability and dispatchability for renewable power plants is mitigated by means of forecasting services which, in its most advance versions, do consider real time continuous meteorological and production data from the field. Nevertheless, the production management of the plant requires an additional optimized (multisession) market participation system that accounts for the deviation between a committed power quantity and power curtailment costs.

There may therefore be the need for a method capable of efficiently managing a hybrid power plant to make it participate to the grid.

### Summary of the Invention

This need may be met by the subject matter according to the independent claims. Advantageous embodiments of the present invention are described by the dependent claims.

According to a first aspect of the present invention, a method of power management of a hybrid power plant comprising at least one type of renewable power generation equipment and an energy storage system, wherein the power plant comprises at least one point of connection with an electrical grid, is provided. The method comprises at an initial time a first step of determining a power availability schedule of the hybrid power plant during a subsequent time range; a second step of providing the power availability schedule for the subsequent time range to a controller of the grid; a third step of receiving from the controller of a grid a committed power schedule for the subsequent time range based on the power availability schedule for the subsequent time range. The method is in particular characterized in that the power availability schedule for the subsequent time range is determined on the basis of at least one historical parameter related to a power delivery during a precedent time range.

In the present application, a power plant including at least one type of renewable energy generation equipment and an energy storage system is known as hybrid power plant. The hybrid power plant comprises at least one point of connection. A point of connection is a shared electrical connection point between at least one of the renewable power generation equipment and the energy storage system and the electrical grid to which the hybrid power plant is connected. The point of connection also refers to the point where the power availability schedule and/or the committed power schedule are established and monitored. In the present application, the terms "hybrid power plant" and "power plant" are used interchangeably for each other.

The energy storage system may for example comprise one or more batteries or accumulators which may store electric energy in form of chemical energy and/or mechanical energy. The renewable power generation equipment may comprise or may not comprise a converter, for example to convert a DC voltage (for example of a battery or an accumulator or a photovoltaic cell) to an AC voltage having a frequency for example corresponding to a nominal frequency (for example 50 Hz or 60 Hz) of an electrical utility grid or and offgrid connection to a specific user or independent network. An energy storage system comprising only batteries is defined as battery energy storage system, also known as BESS.

In the present application, a power availability schedule represents the power that the power plant (or hybrid power plant) is capable of injecting into the grid during a subsequent time range in the future. The power availability schedule may be based on a power coming from the renewable energy generation equipment or from the energy storage system. The power availability schedule can be for example determined on the basis of a forecast parameter, such as weather data during the subsequent time range. Forecast parameters are data and/or pieces of information that are being used to determine the power availability schedule. In particular, forecasts parameters are data and/or pieces of information relating to a scenario and/or a situation during the subsequent time range. For example, the forecasts parameters provide information about the weather conditions in the region of the power plant during the subsequent time range. Also, forecasts parameters can be, for example, an expected energy price in the subsequent time range. The forecast parameters are therefore external constraints which influence the operation of the power plant, in particular the power generation from the renewable power generation equipment and the required power flow to and from the storage resources.

The power availability schedule may in particular be calculated by means of on optimization algorithms, which takes into consideration both the forecasts parameters and the historical parameters. In the second step of the method, the power availability schedule is provided by an energy management system of the power plant to the controller of the grid.

In the present application, the committed power schedule is defined as the power availability schedule that the controller of the grid requests to the power plant to be satisfied during the subsequent time range. The committed power schedule represents therefore a binding request from the controller of the grid to the power plant in terms of the power that needs to be supplied during the subsequent time range. The committed power schedule is determined on the basis of the power availability schedule provided by the energy management system to the controller of the grid. The committed power schedule provided by the controller of the grid is received by the energy management system and represents a binding power schedule (thus committed), which the hybrid power plant has to deliver during the subsequent time range. In particular, the delivery of the committed power schedule by the hybrid power plant to the grid is controlled by a plant controller of the hybrid power plant, which controls both the renewable energy generation equipment and the energy storage system during the subsequent time range in order to meet the power delivery agreed upon in the committed power schedule.

In other words, the committed power schedule is a binding request from the controller of the grid to deliver an established amount of power to the grid during the subsequent time range. Not meeting such established committed power schedule might result in financial penalizations for the hybrid power plant, so that the committed power schedule might be considered to be financially binding for the hybrid power plant.

According to the present invention, the power availability schedule is determined not only on the basis of, for example, forecast parameters for the power availability during the subsequent time range, but also on the basis of historical parameters which are related to a power delivery from the power plant to the grid during a precedent time range.

It is therefore possible to account for, in the calculation of the power availability schedule, events occurred during a precedent time range that might still be influencing the power production and/or delivery in a subsequent time range. Such taking into account of past events influencing a future power delivery increases the predictability and the dispatchability of the wind turbine tower, thus optimizing the power delivery and the functioning of the power plant.

The historical parameter can either be a punctual value representing a specific event in the precedent time range, or it can be a derived value, which takes into account, for example, a mean, a weighted mean or any other weighted or non-weighted derived value of the parameter during a precedent time range. It is noted, that the precedent time range can comprise a plurality of time periods or intervals in the past, so that a mean or a weighted mean can be calculated. For example, values relating to more recent events are weighted more than values relating to more remote events.

The main idea of the present invention might be therefore found in the possibility of determining a power availability of the hybrid power plant for or during a subsequent time range on the basis of historical parameters related to a power delivery from the hybrid power plant during a precedent time range. This process can be applied both to monosession-markets, where the negotiation between the hybrid power plant (the energy management system) and the grid (the controller of grid) happens only once between the initial time and the beginning of the subsequent time range, as well as in multisession-markets, in which the negotiation between the hybrid power plant (the energy management system) and the grid (the controller of grid) is iteratively repeated multiple times between the initial time and the beginning of the subsequent time range.

According to an embodiment, the historical parameter is a committed power schedule for the precedent time range. Therefore, the power availability schedule can be adjusted by taking into consideration a committed power schedule received from the controller of the grid during a precedent time range. In this case, the power availability schedule can be made dependent from a previous committed power schedule, thus taking into account the power requested by the grid or by a controller of the grid in a precedent time range. This can be particularly advantageous when the precedent and the subsequent time range at least partially include the same time period of a day such as, for example, a time range from midnight to six o'clock in the morning or the like. Thus, the historical value power requested by the grid or by the controller of the grid in form of a committed power schedule during a specific time range, which repeats itself, is taken into consideration.

According to an embodiment the historical parameter is a totalization of a penalizations due to power injection violations, determined as a deviation between a delivered power schedule and a committed power schedule during the precedent time range. In this case, the penalizations applied to the hybrid power plant for delivering less or more power than the one established in the committed power schedule during the precedent time range are therefore taken into considerations. If, for example, the penalization for delivering less power is higher than the one for delivering more power, the power availability schedule might be adjusted accordingly, so that the power availability schedule offered to the controller of the grid is calculated in a conservative manner.

According to an embodiment, the historical parameter is a totalization of a power curtailment, determined as a deviation between an available power and a committed power schedule during the precedent time range. Therefore, if the plant regularly produces more power than the one foreseen in the committed power schedule and the excess power has to be curtailed during the delivery, a power availability schedule with an higher power delivery might be offered to the controller of the grid.

Therefore, the historical parameter may be a deviation between a committed power schedule during the precedent time range and the power delivery during the precedent time range. Therefore, it is possible to adjust the power availability schedule in terms of the power committed in the committed power schedule and the actual delivered power: If the power plant delivered less power than committed, and depending on the applicable penalizations, the power availability schedule can be reduced by taking into account the deviation from the precedent time range; If, on the contrary, the power plant delivered more power than committed or if the available power was not fully sold and injected to the grid, the power availability schedule can be increased by taking into account the deviation or the power generation curtailment from a precedent time range.

According to an embodiment, the historical parameter is a ratio between a power curtailment to a power penalization during the precedent time range. In such case, a comparison between the penalization that has to be paid for delivering less or more power than the one committed to the grid with the committed power schedule in the precedent time range (power penalization) and the lost income due to power curtailment, when more power than the one committed to the grid with the committed power schedule in the precedent time range, is performed to establish which of the two conditions is more favorable in terms of monetization and optimization of the power plant.

According to an embodiment, the historical parameter represents a deviation between a weather forecast for the precedent time range and the actual weather during the precedent time range. Therefore, the historical data about the weather forecast in the region of the power plant and the actual weather in the region of the power plant can be used as a parameter for adjusting the power availability schedule. For example, if the historical data show that the power plant through the renewable energy generation equipment could produce more power than predicted with the forecast, the power availability schedule can be adjusted to a higher level of power delivery. If, on the contrary, the historical data show that the power plant through the renewable energy generation equipment could not produce as much power as predicted with the forecast, the power availability schedule can be adjusted to a lower level of power delivery.

According to an embodiment, the historical parameter is a delivered power schedule for the precedent time range. A delivered power schedule is the power that the power plant delivered to the grid in the precedent time range. The delivered power schedule may deviate from the committed power schedule. The delivered power schedule may therefore be less or more than the committed power schedule. Therefore, the power availability schedule can be adjusted by using the actually delivered power during the precedent time range.

According to an embodiment, the historical parameter is a power regulation request from the grid controller during the precedent time range. In this case, variations from the committed power schedule during the precedent time range due to a change in the power requested from the grid controller during the precedent time range are considered. It might for example be the case, that during a specific time range, such as from 22:00 o'clock of a day to 6:00 o'clock of the following day, the grid controller requests more or less power than the one established in the committed power schedule and that, for such modification, the power plat is rewarded from the grid in terms of monetization. Therefore, the method can adapt the power availability schedule and/or the committed power schedule for the subsequent time range in terms of a power regulation requested by the grid controller in the precedent time range in a similar situation.

According to an embodiment, the method further comprises determining the power availability schedule for the subsequent time range on the basis of at least one forecast parameter. Therefore, the power availability schedule might be determined on the basis of a forecast for the power that can be delivered by the power plant during the subsequent time range, so that the power availability schedule and/or the committed power schedule can be adjusted accordingly.

According to an embodiment, the forecast parameter is one of a weather forecast and an energy price prediction forecast. Weather data might include the sun hours, the wind speed and the like. Other parameters that might be used comprise, for example, an optimal state of charge of the energy storage system, so that the lifetime of the energy storage system is improved. Also it might be possible that the forecast parameter is a power production forecast for the subsequent time range.

According to an embodiment, the forecast parameter is an energy price variation forecast for the subsequent time range. An energy price variation forecast represents the changing of the energy price for the subsequent time range during the time between the initial time and the beginning of the subsequent time range.

While the price prediction forecast is directed towards the determination of the energy price variation during the subsequent time range, the energy price variation forecast is directed toward the determination of the energy price variation during the time spanning between the initial time and the beginning of the subsequent time range.

According to an embodiment, the method further comprises at an intermediate time (or market sessions) between the initial time and the subsequent time range:
determining an updated power availability schedule of the hybrid power plant during a subsequent time range on the basis of the committed power schedule for the subsequent time range;
   providing the updated power availability schedule to the controller of the grid;
   receiving from the controller of a grid an updated committed power schedule for the subsequent time range based on the updated power availability schedule for the subsequent time range;
wherein the updated power availability schedule for the subsequent time range is determined on the basis of at least one historical parameter related to a power delivery at a time period between the initial time and the intermediate time.
Therefore, according to such embodiment, it is possible to adjust the power availability schedule with historical parameters related to a power delivery to the grid during a time period between the initial time and the subsequent time range.

According to such embodiment, therefore, a multisession-market is provided, in which the committed power schedule might be renegotiated multiple times between the initial time and the beginning of the subsequent time range, so that the committed power schedule might be renegotiated to meet more favorable conditions.

According to a second aspect of the present invention, an arrangement for managing a hybrid power plant with at least one type of renewable power generation equipment and an energy storage system, wherein the power plant comprises at least one point of connection with an electrical grid is provided. The arrangement comprises:
an energy management system configured to:
   determine a power availability schedule of the hybrid power plant during a subsequent time range;
   offer the power availability schedule to a controller of the grid;
   receive from the controller of the grid a committed power schedule for the subsequent time range based on the power availability schedule for the subsequent time range;
a local plant controller configured to, during the subsequent time range, supply power to the point of connection on the basis of the committed power schedule
wherein the power availability schedule for the subsequent time range is determined on the basis of at least one historical parameter related to a power delivery during a precedent time range.

The arrangement might comprise a memory system in which the at least one historical parameter related to a power delivery during the precedent time range is related. Alternatively, the historical parameter might be provided via a cloud or via a telecommunication system to the energy management system for determining the power availability schedule.

According to a third aspect of the present invention, a hybrid power plant comprising at least an arrangement according to the second aspect of the present invention is provided claim.

It is noted that the arrangement according to the second aspect of the present invention may include any of the features disclosed in the method according to the first aspect of the invention and that, vice versa, the method according to the first aspect of the invention may include any of the features disclosed in the arrangement according to the second aspect of the invention.

### Brief Description of the Drawing

Figure 1 shows a power plant according to an exemplary embodiment of the invention.
Figure 2 shows a schematically representation of an arrangement according to the present invention.

### Detailed Description

The illustration in the drawing is schematical. It is noted that in different figures, similar or identical elements are provided with the same reference signs or with reference signs, which are different from the corresponding reference signs only within the first digit.

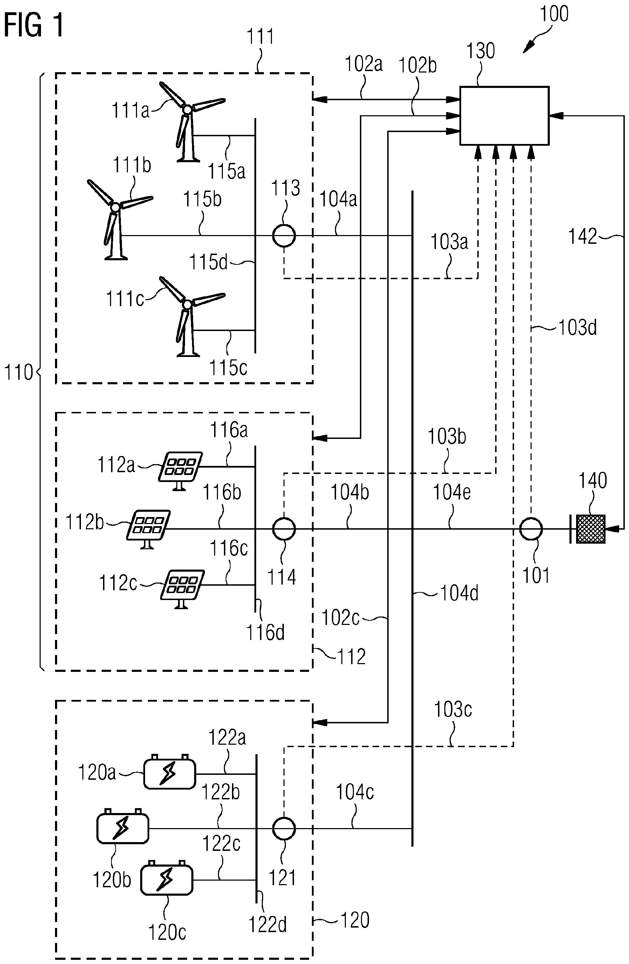

**Figure 1** shows a hybrid power plant 100 according to an embodiment of the present invention. The power plant 100 comprises renewable energy generation equipment 110, an energy storage system 120 and an arrangement 130 for managing the power plant 100. The power plant 100 is connected to an electrical grid 140 via a point of connection 101.

In the present embodiment, the renewable energy generation equipment 110 is of two types: on the one side there are wind turbines 111a, 111b, 111c forming a wind power plant 111 and on the other side there are solar panels 112a, 112b, 112c forming a solar energy park 112.

The wind turbines 111a, 111b, 111c are electrically connected via power lines 115a, 115b, 115c respectively to a power line 115d and through the power line 115d to a wind park connection point 113, which electrically connects the wind turbines 111a, 111b, 111c to the power lines 104a, 104d, 104e and through these to the point of connection 101, so that the electrical energy produced in the wind power plant 111 can be distributed to the grid 140.

In a similar fashion, the solar panels 112a, 112b, 112c are electrically connected via power lines 116a, 116b, 116c respectively to a power line 116d and through the power line 116d to a solar park connection point 114, which electrically connects the solar panels 112a, 112b, 112c to the power lines 104b, 104d, 104e and through these to the point of connection 101, so that the electrical energy produced in the solar energy park 112 can be distributed to the grid 140.

The energy storage system 120 includes a number of batteries 120a, 120b, 120c. These are electrically connected via power lines 122a, 122b, 122c to a power line 122d and through this to an energy storage system connection point 121. The energy storage system connection point 121 connects the energy storage system 120 with power lines 104c, 104d of the power plant 100. When the batteries are being discharged, power is supplied from the energy storage system 120 through the energy storage system connection point 121 to the power lines 104c, 104d, 104e and through these to the point of connection 101 and finally to the grid 140. When the batteries are being charged, then power is supplied from the wind power plant 111 and/or the solar energy park 112 through power lines 104d, 104c to the energy storage system connection point 121 and through this to the power lines connecting the energy storage system connection point 121 with the batteries 120a, 120b and 120c for charging them.

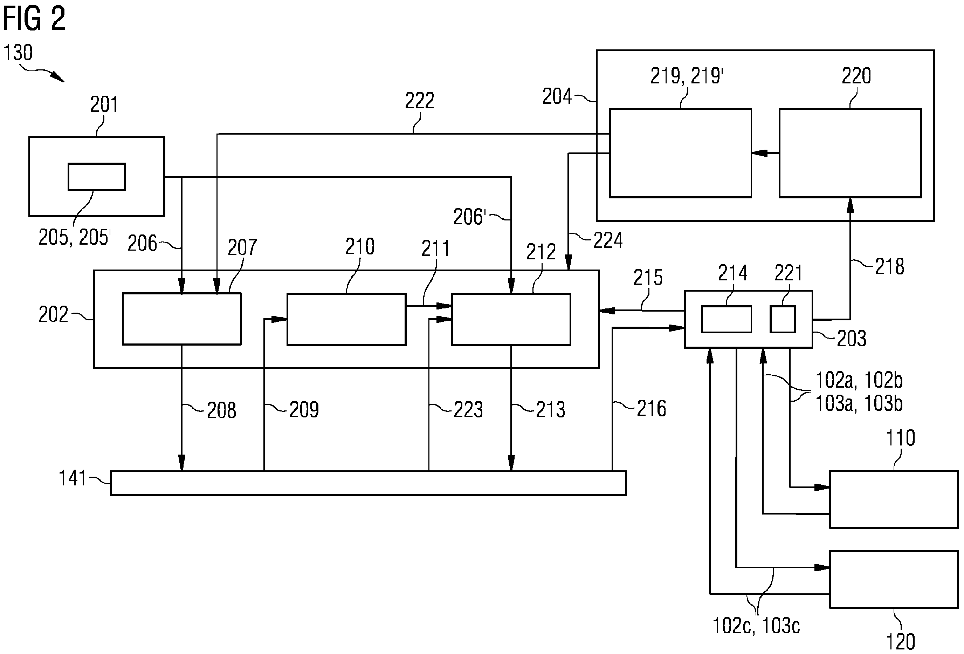

The arrangement 130, which is described in detail in **Figure 2****,** controls via feedback and regulation loops, represented by the lines 102a, 102b, 102c, the wind power plant 111, the solar energy park 112 and the energy storage system 120. In particular, each of these three components of the power plant 100 are separately controlled and regulated by the arrangement 130. In particular, the arrangement 130 is configured to regulate the power through references and control signals and also to connect or disconnect any of the wind turbines 111a, 111b, 111c and/or solar panels 112a, 112b, 112c.

The arrangement 130 is also configured to regulate the power supply or completely connect or disconnect the whole wind power plant 111 and/or the whole solar energy park 112 by enabling or disabling the power distribution through the wind park connection point 113 or the solar park connection point 114. To control the wind park connection point 113 and the solar park connection point 114, dedicated signal lines 103a and 103b are provided, these signals are sent to each wind and solar generation resource's controller as power reference setpoints for each of its power regulators.

Furthermore, the arrangement 130 is configured to regulate the power flow, connect or disconnect the energy storage system 120 through references and control signals. If the energy storage system 120 is connected, then the batteries 120a, 120b, 120c can either be charged or discharged, depending on the settings provided by the arrangement 130 for controlling the energy storage system connection point 121. The arrangement 130 controls the energy storage system connection point 121 via a dedicated signal line 103c. It might also be the case, that one or more batteries are connected and one or more are disconnected, so that the batteries 120a, 120b, 120c can be controlled separately by the arrangement 130. Also, the arrangement 130 is configured to control the point of connection 101 via a dedicated signal line 103d.

It is herewith specified, that each of the connection points 113, 114, 121 and the point of connection 101 are not only for fully connecting or fully disconnecting two power lines or the power line 104e and the grid 140, but that they can also partially connect or partially disconnect two power lines or the power line 104e and the grid 140, thus allowing a reduced amount of electrical power to be transmitted through it. Besides the connection and disconnection of the power lines, the signals transmitted through 103a, 103b, 103c are sent to each wind, solar generation and storage resource's controller as power reference setpoints for each of its power regulators. This control is made through power setpoint references sent to the devices and measurements taken at the points of connection.

From **Figure 1** it is clear, how the arrangement 130 controls the whole power plant 100 and the power supply of the same to the point of connection 101. The supplied power and its composition, being the sum of the power generated by the renewable energy generation equipment 110 and the power from the energy storage system 120, is also controlled by the arrangement 130 with the aim of meeting a committed power schedule committed into the electricity market and control the supplied power on the basis of input signals received from the controller of the grid 141 and of at least one optimization parameter. The communication between the controller of the grid 141 and the arrangement 130 is performed via a signal line 142.

**Figure 2** shows the arrangement 130 in a detailed manner. The arrangement 130 comprises a forecast service system 201, an energy management system 202, a local plant controller 203 and a historical parameter database 204.

The forecast service system 201 retrieves forecasts parameters 205, such as weather forecast, power generation and market pricing data, from sources which are external to the arrangement 130, such as authorized forecast service providers. The forecasts parameters 205 are then passed to the energy management system 202 at an initial time t0. The forecasts parameters 205 can include a power generation forecast on the basis of weather forecast parameters, a price forecast for the energy price which may include both the expected price prediction as well as the expected price variation forecast or a state of charge objective of the energy storage system 120, that is a temporal schedule of the charge status of the energy storage system 120. Also, the forecast parameter 205 may include a power production forecast for the subsequent time range.

The energy management system 202 receives the forecast parameters 205 from the forecast service system 201 (step 206) and determines a power availability schedule 207 on the basis of such forecast parameters 205 for a subsequent time period tS, which is a time range subsequent to the initial time t0. The power availability schedule 207 is transmitted to the controller of the grid for the current market session in step 208. The controller 141 of the grid 140 then provides and transmits (step 209) a committed power schedule 210 to the energy management system 202. The committed power schedule 210 represents the power schedule that the hybrid power plant 100 has to deliver to the grid 140 in the subsequent time range tS and can be defined as a financially binding commitment with the controller 141 of the grid 140, as if less or more power is delivered than the one foreseen in the committed power schedule penalties might occur.

The power availability schedule 207 is be determined on the basis of at least one historical parameter 219, which is saved in the historical parameter database 204 and is fed to the energy management system 202 for the determination of the power availability schedule 207 in step 222. The at least one historical parameter 219 may be extracted from a memory 220, in which a set of historical parameters relating to previous power deliveries are stored for being used to predict and adjust the power availability schedule 207 during the subsequent time range tS. The historical parameter database 204 might be provided on a memory device of the arrangement 130 or it might be provided as an external device which might, for example, communicate via a network with the arrangement 130.

The historical parameter 219 is representative of a power delivery of the power plant 100 to the grid 140 in a precedent time range tP, which is a time range being prior to the initial time t0. By taking in consideration the at least one historical parameter 219, it is therefore possible to adjust the power availability schedule 207 on the basis of data representing the plant's performance during a previous time range including, but not limited to, power curtailment and penalizations information, depicting the historical trend between the penalizations due to power injections being different from the committed values and the power curtailment representing the power that could have been offered, sold and injected but that has been limited in order not to exceed the committed power values. Also other aspects might be taken into account by the historical parameter such as, for example, a committed power schedule during the precedent time range tP or the actual injected power during the precedent time range tP

The power availability schedule 207 can also be determined on the basis of at least one forecasting parameter 205 including, but not limited to, power plant's generation forecast and energy market's price and expected variations throughout the market sessions. Moreover, the calculation of the schedules are performed considering the status of the plant, transmitted from the plant controller 203 to the EMS system 202 (step 215).

By doing so, the predictability and the dispatchability of the power supply from the power plant 100 can be improved, so that the power plant 100 can be better integrated within the grid 140.

In a subsequent step 211, the energy management system 202 determines an updated power availability schedule 212 at an intermediate time tI that is comprised between the initial time t0 and the beginning of the subsequent time range tS. The updated power availability schedule 212 is determined on the basis of updated forecast parameters 205' and transmitted to the energy management system 202 in step 206'.

The updated historical parameters 219', which are delivered to the energy management system 202 in step 224, are representative of a power delivery from the hybrid power plant 100 to the grid 140 in a time interval between the initial time t0 and the intermediate time tI and take therefore into account changed conditions that might be affecting the power production capabilities of the hybrid power plant 100 during the subsequent time range tS.

The updated power availability schedule 212 is offered to the controller 141 of the grid 140 (step 213), which determines an updated committed power schedule 214 (also final committed power schedule), which is delivered to the local plant controller 203 in step 216.

The updated committed power schedule 214 is a binding commitment for the hybrid power plant 100 in terms of power to be delivered to the point of connection 101 during the subsequent time range tS.

The updated committed power schedule 214 is a physically binding commitment from the power plant 100 to the controller 141 of the grid 140 and obliges the power plant 100 to deliver the power established in the updated committed power schedule 214 during the subsequent time range tS.

To achieve this, the local plant controller 203 controls the renewable energy generation equipment 110 and the energy storage system 120 in terms of the energy that has to be provided from them to the grid. To do this, the local plant controller 203 will command the power dispatch according to the updated committed power schedule 214 received from the controller 141 of the grid 140 in step 216. The local plant controller 203 then controls the power supply from the renewable energy generation equipment 110 and from the energy storage system 120 to the grid 140 via the feedback and regulation loops 102a to 102c by regulating the wind park connection point 113, the solar park connection point 114 and the energy storage system connection point 121 via the dedicated signal lines 103a, 103b, 103c.

The local plant controller 203, by continuously measuring the plant's status, provides a delivered power schedule 221 to the historical parameter database 204 in step 218. Such delivered power schedule 221 represents the power actually delivered from the power plant 100 to the grid 140 and is saved in the historical parameter database 204, in particular in the memory 220 (step 218).

The above-described procedure can be repeated two, three or more times between the initial time t0 and the beginning of the subsequent time range tS, in other as many times as there are available market sessions, that are time intervals between the initial time tI and the beginning of the subsequent time period, depending on each grid market operator.

To achieve this, the procedure described for the determination of the updated power availability schedule 212 and the updated committed power schedule 214 can be repeated as many times as necessary (loop 213, 223), wherein the updated committed power schedule 214 is used as the basis for determining a further updated power availability schedule.

The above described updating process can be performed a number of times at regular or irregular intervals between the initial time t0 and the beginning of the subsequent time range tS for all the sessions included within each electricity market.

The present invention may also relate to or include a method of power management of a hybrid power plant 100 according to a new or any of the previous embodiments, where a renewable energy generation equipment 110 and an energy storage system 120 are both interconnected to the grid 140 through a common point of connection 101.

Generated power then can be injected into the grid 101 or used to charge the energy storage system 120, and the storage power can also be injected into the grid 101.

The method may comprise the steps:
- Determining a reactive power availability schedule of the hybrid power plant 100 for its injection (or absorption) to (and from) the electrical grid 140 during the predefined time range on the basis of forecast parameters and of at least one optimization parameter, while also taking into account the optimum active power generation schedules from the renewable energy generation equipment 110, as well as the active power and energy schedules from the energy storage system 120.
- Once offered and accepted by the electricity market, the committed reactive power schedule is transmitted to the hybrid power plant's 100 controller being in charge of dispatching the required reactive power injection by commanding the operation setpoint of the controllers for respectively the energy storage system 120 and the renewable energy generation equipment 110.

Based on the hybrid power plant's 100 status the hybrid plant's controller calculates and regulates the required reactive power injection by commanding the operation setpoint of the controllers for respectively the energy storage system 120 and the renewable energy generation equipment 110. This is e.g. based on receiving a specific reactive power (or associated voltage) instruction from an operator of the grid 140, being based on a predefined reactive power injection response according to a grid 140 measurement.

Besides commanding the reactive power injection (or its corresponding voltage) setpoint of the resources, the controller for the hybrid power plant 100 may manage the dispatch of the reactive power by taking into account not to exceed the committed reactive power availability schedules for control received from the trader. This could be by totalizing the amount of reactive power injection during each of the committed time intervals and to limit it accordingly if necessary.

The method may further include for the reactive power availability offer schedules to be presented individually for each of the resources 100, 120, 110, and the control and regulation of the reactive power injections are performed by each of the respective corresponding controllers.

It should be noted that the term "comprising" does not exclude other elements or steps and the use of articles "a" or "an" does not exclude a plurality. Also, elements described in association with different embodiments may be combined. It should also be noted that reference signs in the claims should not be construed as limiting the scope of the claims.

Independent of the grammatical term usage, individuals with male, female or other gender identities are included within the term.

## Claims

1. Method of power management of a hybrid power plant (100) comprising at least one type of renewable power generation equipment (110) and an energy storage system (120), wherein the power plant (100) comprises at least one point of connection (101) with an electrical grid (140), wherein the method comprises at an initial time (t0):
determining a power availability schedule (207) of the hybrid power plant (100) during a subsequent time range (tS);
providing the power availability schedule (207) to a controller (141) of the grid (140);
receiving from the controller (141) of a grid (140) a committed power schedule (210) for the subsequent time range (tS) based on the power availability schedule (207) for the subsequent time range (tS);
wherein the power availability schedule (207) for the subsequent time range (tS) is determined on the basis of at least one historical parameter (219) related to a power delivery during a precedent time range (tP).

2. The method of claim 1, wherein the historical parameter (219) is a totalization of a penalizations due to power injection violations, determined as a deviation between a delivered power schedule and a committed power schedule during the precedent time range (tP).

3. The method of claims 1 to 2, wherein the historical parameter (219) is a totalization of a power curtailment, determined as a deviation between an available power and a committed power schedule during the precedent time range (tP)

4. The method of any of claims 1 to 3, wherein the historical parameter (219) is a ratio between a power curtailment to a power penalization during the precedent time range (tP).

5. The method of any of claims 1 to 4, wherein the historical parameter (219) represents a deviation between a weather forecast for the precedent time range and the actual weather during the precedent time range (tP).

6. The method of any of claims 1 to 5, wherein the historical parameter (219) is a delivered power schedule for the precedent time range (tP).

7. The method of any of claims 1 to 6, wherein the historical parameter (219) is a power regulation request from the controller (141) of the grid (140) during the precedent time range (tP).

8. The method of any of claims 1 to 7, wherein the method further comprises determining the power availability schedule (207) for the subsequent time range (tS) on the basis of at least one forecast parameter (205).

9. The method of claim 8, wherein the forecast parameter (205) is weather forecast or a power production forecast.

10. The method of claim 8 or 9, wherein the forecast parameter (205) is an energy price prediction.

11. The method of any of claims 8 to 10, wherein the forecast parameter (205) is an energy price variation for the subsequent time range (tS) between the initial time (t0) and the subsequent time range (tS).

12. The method of any of claims 1 to 11, wherein the method further comprises at an intermediate time (tI) between the initial time (t0) and the subsequent time range (tS):
determining an updated power availability schedule (212) of the hybrid power plant (100) during a subsequent time range (tS) on the basis of the committed power schedule (210) for the subsequent time range (tS);
providing the updated power availability schedule (212) to the controller (141) of the grid (140);
receiving from the controller (141) of a grid (140) an updated committed power schedule (214) for the subsequent time range (tS) based on the updated power availability schedule (212) for the subsequent time range (tS);
wherein the updated power availability schedule (212) for the subsequent time range (tS) is determined on the basis of at least one updated historical parameter (219') related to a power delivery (221) at a time period between the initial time (t0) and the intermediate time (tI).

13. Arrangement (130) for managing a hybrid power plant (100), comprising at least one type of renewable power generation equipment (110) and an energy storage system (120), wherein the power plant (100) comprises at least one point of connection (101) with an electrical grid (140), the arrangement comprising:
an energy management system (202) configured to:
determine a power availability schedule (207) of the hybrid power plant (100) during a subsequent time range (tS) ;
offer the power availability schedule (207) for the subsequent time range (tS) to a controller (141) of the grid (140);
receive from the controller (140) of the grid (140) a committed power schedule (210) for the subsequent time range (tS) based on the power availability schedule (207) for the subsequent time range (tS);
a local plant controller (203) configured to, during the subsequent time range (tS), supply a power to the point of connection (101) on the basis of the committed power schedule (210) for the subsequent time range (tS),
wherein the power availability schedule (207) for the subsequent time range (tS) is determined on the basis of at least one historical parameter (219) related to a power delivery during a precedent time range (tP).

14. Hybrid power plant (100) comprising at least an arrangement (130) according to claim 13.
